(19) Europäisches Patentamt
European Patent Office
Office européen des brevets

(11) Veröffentlichungsnummer: **0 212 412 B1**

(12) # EUROPÄISCHE PATENTSCHRIFT

(45) Veröffentlichungstag der Patentschrift: **30.12.92**

(51) Int. Cl.$^5$: **C09B 33/00**, C09B 45/24, D06P 1/02

(21) Anmeldenummer: **86110740.7**

(22) Anmeldetag: **04.08.86**

Die Akte enthält technische Angaben, die nach dem Eingang der Anmeldung eingereicht wurden und die nicht in dieser Patentschrift enthalten sind.

(54) **Polyazofarbstoffe.**

(30) Priorität: **16.08.85 DE 3529250**

(43) Veröffentlichungstag der Anmeldung:
**04.03.87 Patentblatt 87/10**

(45) Bekanntmachung des Hinweises auf die Patenterteilung:
**30.12.92 Patentblatt 92/53**

(84) Benannte Vertragsstaaten:
**CH DE FR GB LI**

(56) Entgegenhaltungen:
**DE-A- 2 033 602**
**DE-B- 1 292 277**
**GB-A- 779 486**

(73) Patentinhaber: **BAYER AG**
**W-5090 Leverkusen 1 Bayerwerk(DE)**

(72) Erfinder: **Mennicke, Winfried, Dr.**
**Steglitzerstrasse 8**
**W-5090 Leverkusen(DE)**
Erfinder: **Herd, Karl Josef, Dr.**
**Am Gartenfeld 66**
**W-5068 Odenthal(DE)**

**EP 0 212 412 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind die alkylsulfonyl- und sulfonamidgruppenhaltigen Polyazofarbstoffe der Formeln (I)

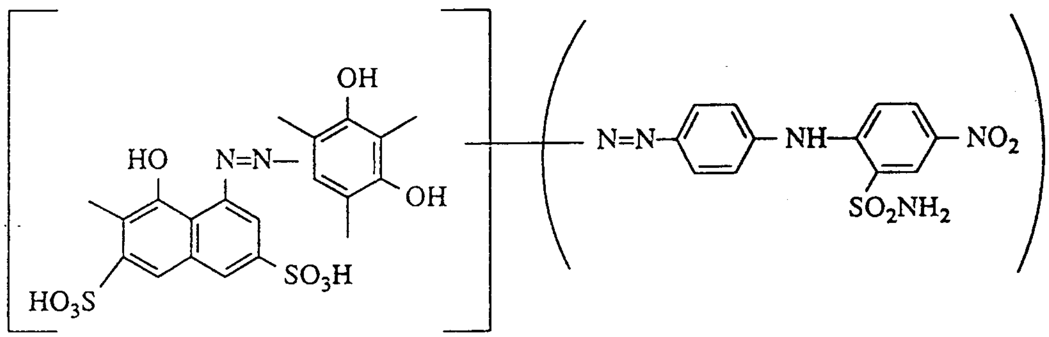

(I)

und (II)

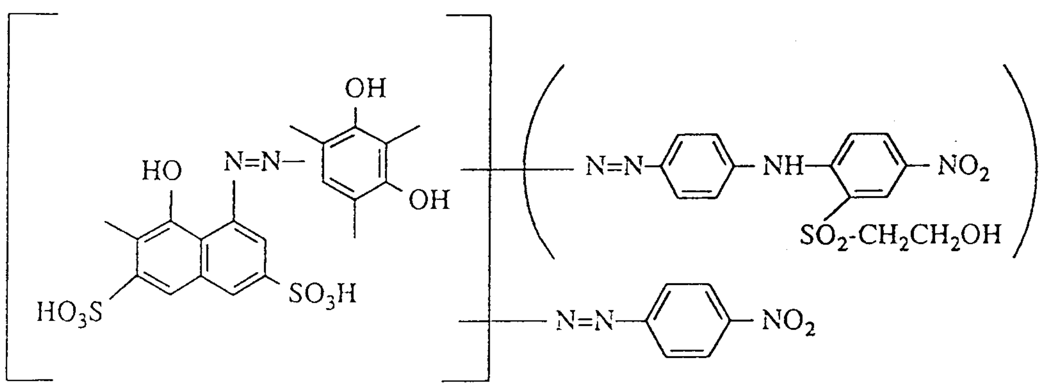

(II)

Die neuen Farbstoffe der Formeln (I) und (II) werden in üblicher Weise (vgl. z.B. DE-A 1 292 277 und 2 033 602) durch Umsetzung der Kupplungskomponente der Formel (III)

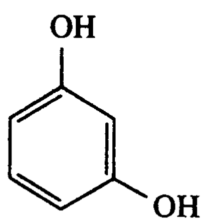

(III)

mit den Diazoniumverbindungen der Amine der Formeln (IV) und (V)

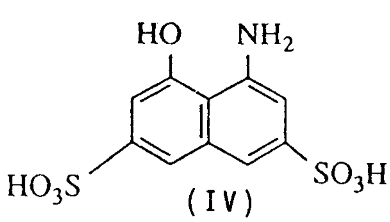

(IV)

und

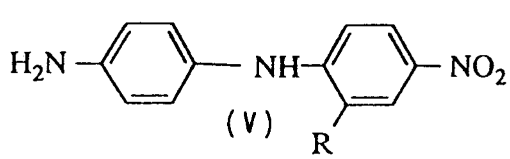

(V)

worin
R für $-SO_2NH_2$ oder $-SO_2CH_2CH_2OH$ steht
und gegebenenfalls mit p-Nitroanilin, in beliebiger Reihenfolge, hergestellt.

Die zum Teil pH-abhängigen Anknüpfungsstellen sind dabei statistisch verteilt (vgl. auch die obengenannte DE-A 1 292 277).

Die Kupplung der Diazoniumderivate von (IV) erfolgt vorzugsweise an erster oder, bei der Herstellung von (II), an zweiter Stelle , die der Diazoniumderivate von (V) an zweiter Stelle und die des diazotierten p-Nitroanilins an letzter Stelle.

Die erfindungsgemäßen Polyazofarbstoffe der Formeln (I) und (II) können durch Aussalzen oder Sprühtrocknung vorzugsweise in Form ihrer Natriumsalze isoliert werden. Sie sind gut wasserlöslich, beständig gegenüber Säuren und Alkalien und eignen sich zum Färben von synthetischen und natürlichen amidgruppenhaltigen Materialien, wie Polyamid- und Polyurethanfaser, Wolle, Seide und Leder. Sie zeichnen sich durch eine hohe Affinität sowohl zu mit Chromsalzen gegerbten Ledern als auch zu mit vegetabilen oder synthetischen Gerbstoffen nachgegerbten Ledern aus und dienen vorzugsweise zum Färben von Leder. Man erzielt egale Lederfärbungen in tiefen, vollen Brauntönen mit guten Allgemeinechtheiten, insbesonders guter Schleif-, Schweiß- und Migrationsechtheit.

Beispiel 1

34,1 g (0,1 Mol) Mononatriumsalz von 1-Amino-8-hydroxynaphthalin-3,6-disulfonsäure werden in 350 ml Wasser durch Zusatz von 10,4 ml 10 n Natronlauge gelöst. Man läßt innerhalb von 20 Minuten 28 ml 10 n Salzsäure zulaufen und rührt die dabei entstehende Suspension. Nach einer Stunde gibt man 50 g Eis zu, läßt innerhalb von 20 Minuten 23 ml 4,35 n Natriumnitritlösung unter die Oberfläche zutropfen, rührt die erhaltene Diazoniumsupension bei 23 - 25 ° C eine stunde lang nach und entfernt dann überschüssige salpetrige Säure mit Aminosulfonsäure.

11 g (0,1 Mol) Resorcin werden in 50 ml Wasser gelöst. Man setzt 12,5 ml 10 n Natronlauge zu und läßt innerhalb von 10 Minuten gleichmäßig die Diazoniumsuspension zulaufen. Gleichzeitig wird der pH durch Zutropfen von ca. 12 ml 10 n Natronlauge bei 8,5 gehalten. Die Kupplung ist sofort beendet.

77 g (0,25 Mol) 4-Amino-4'-nitrodiphenylamin-2'sulfonamid werden in 600 ml Wasser und 70 ml 10 n Salzsäure angerührt. Durch Zugabe von 500 g Eis wird die Temperatur auf 0 ° C gesenkt. Im Verlauf von 45 Minuten laufen 58 ml 4,35 n Natriumnitritlösung unter die Oberfläche zu. Man rührt 1,5 Stunden bei 5 - 10 ° C nach, entfernt überschüssige salpetrige Säure mit etwas Amidosulfonsäure und setzt die Diazoniumsuspension innerhalb von 20 Minuten der obigen Farbstofflösung zu, wobei auch hier der pH durch gleichzeitiges Zutropfen von 42 ml 10 n Natronlauge bei 8,5 gehalten wird. Nach zwei Stunden wird der Farbstoff der Formel

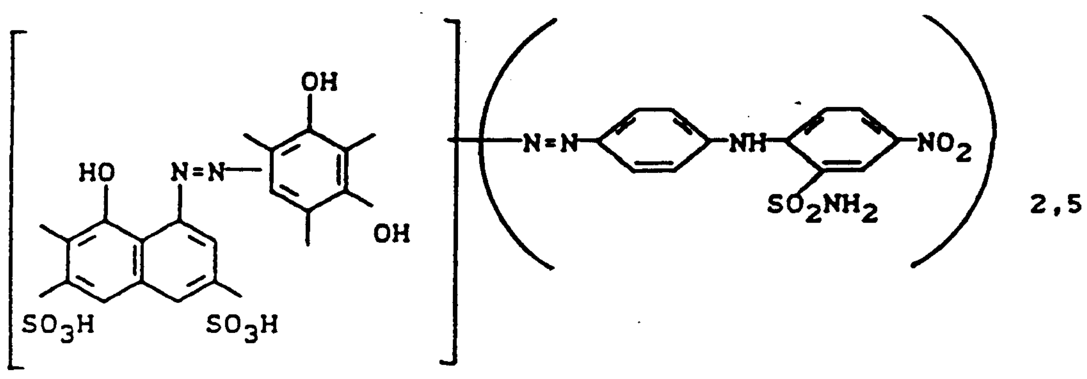

mit 20 % Natriumchlorid ausgesalzen, abgesaugt und getrocknet. Man erhält ein schwarzbraunes Pulver, welches Leder in vollen gelbstichig dunkelbraunen Nuancen färbt.

Beispiel 2

Analog zu Beispiel 1, jedoch unter Verwendung von 4-Amino-2'-(2-hydroxyethylsulfonyl)-4'-nitrodiphenylamin anstelle von 4-Amino-4'-nitrodiphenylamin-2'-sulfonamid und unter zusätzlicher Verwendung von p-Nitroanilin als weitere Kupplungskomponente wurde der Farbstoff der Formel

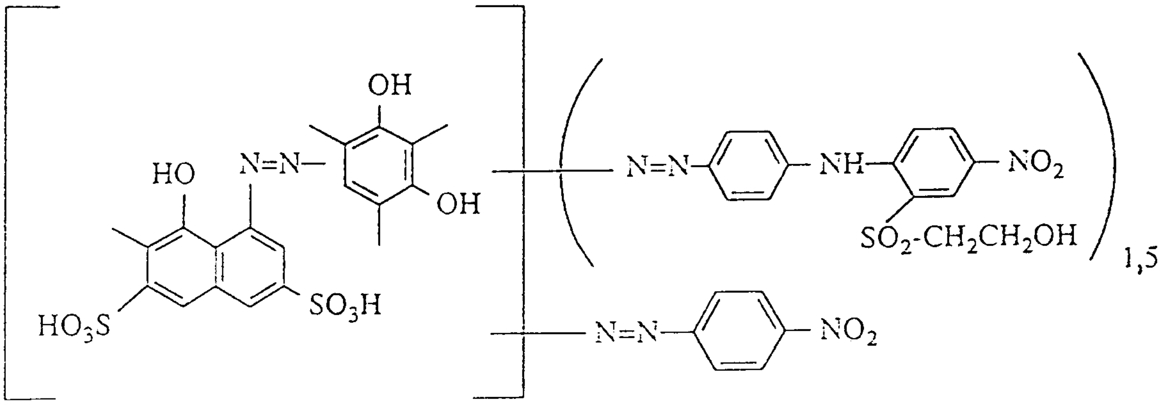

hergestellt.

**Patentansprüche**

1. Polyazofarbstoff der Formel

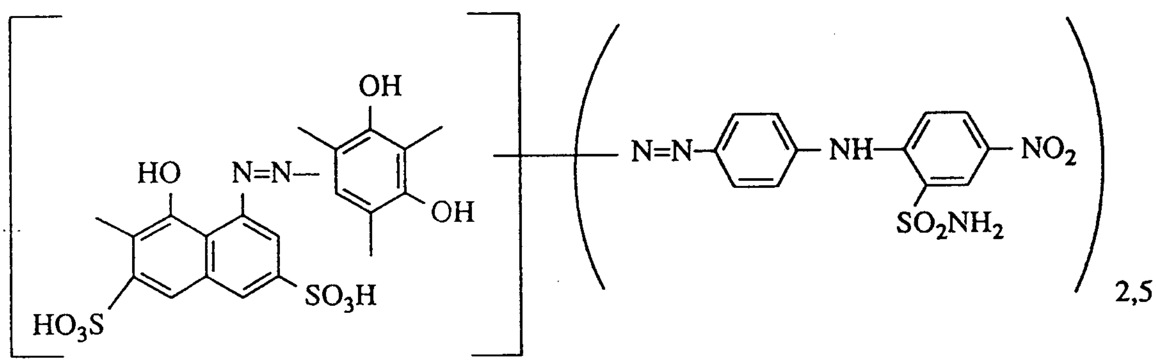

2. Polyazofarbstoff der Formel

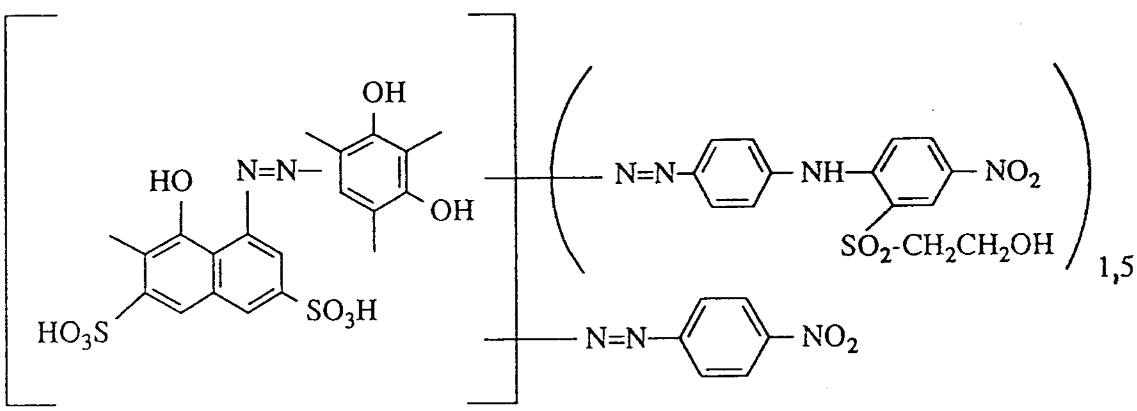

3. Verfahren zur Herstellung von Polyazofarbstoffen gemäß Ansprüchen 1 und 2, dadurch gekennzeichnet, daß man Kupplungskomponenten der Formel

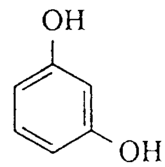

mit den Diazoniumverbindungen der Amine der Formeln

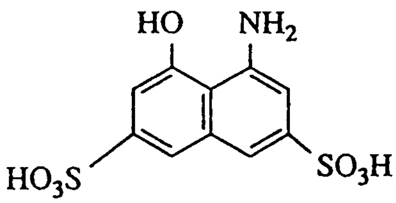

und

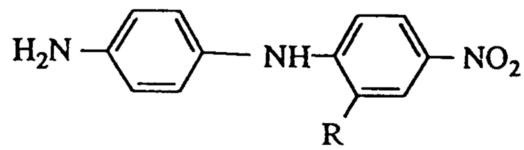

worin
R für $-SO_2NH_2$ oder $-SO_2CH_2CH_2OH$ steht,
und gegebenenfalls des p-Nitroanilins in beliebiger Reihenfolge
und an sich bekannter Weise vereinigt.

4. Verfahren zum Färben von amidgruppenhaltigen Fasern, dadurch gekennzeichnet, daß man Farbstoffe gemaß Ansprüchen 1 und 2 verwendet.

5. Verfahren zum Färben von Leder, dadurch gekennzeichnet, daß man Farbstoffe gemäß Ansprüchen 1 und 2 verwendet.

**Claims**

1. Polyazo dyestuff of the formula

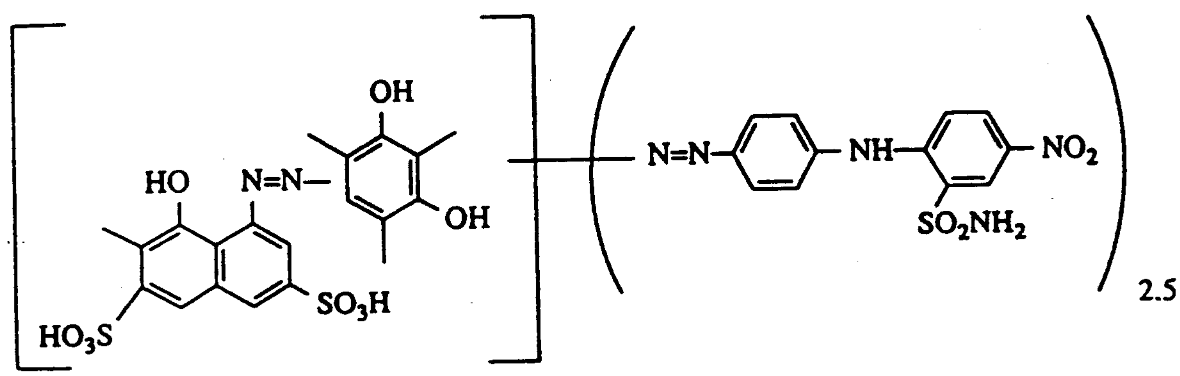

2. Polyazo dyestuff of the formula

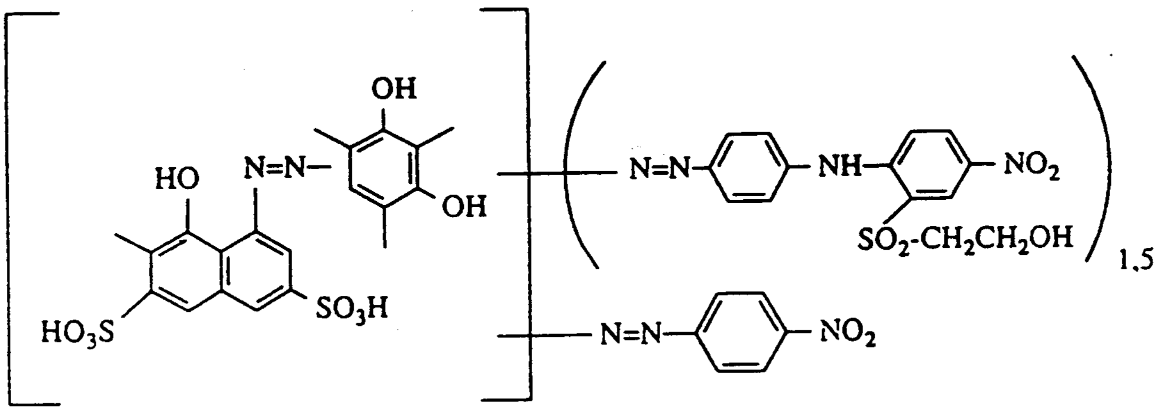

3. Process for the preparation of polyazo dyestuffs according to Claims 1 and 2, characterised in that coupling components of the formula

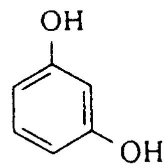

are combined with the diazonium compounds of the amines of the formulae

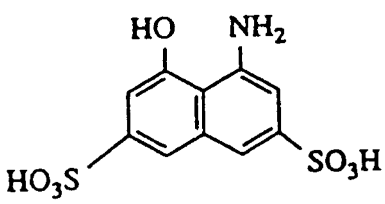

and

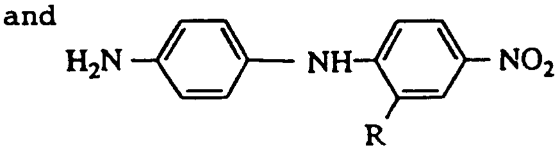

wherein
R represents $-SO_2NH_2$ or $-SO_2CH_2CH_2OH$,
and if appropriate of p-nitroaniline, in any desired sequence and in a manner which is known per se.

4. Process for dyeing fibres containing amide groups, characterised in that dyestuffs according to Claims 1 and 2 are used.

5. Process for dyeing leather, characterised in that dyestuffs according to Claims 1 and 2 are used.

**Revendications**

1. Colorant polyazoïque de formule

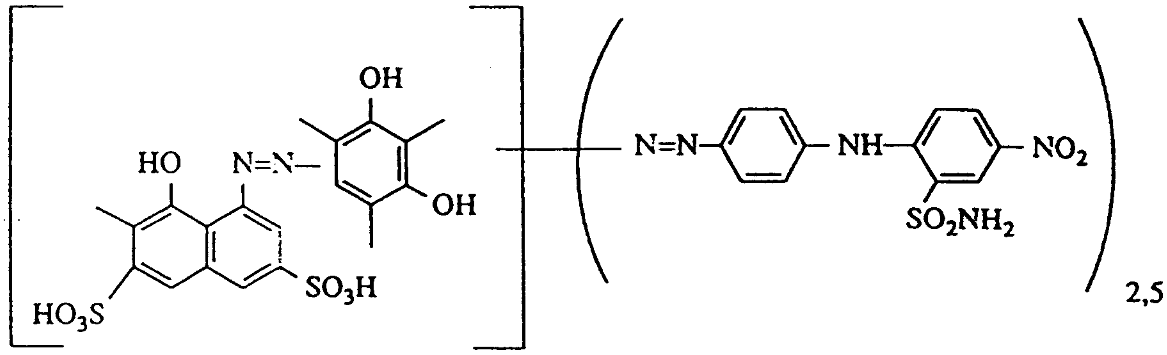

2. Colorant polyazoïque de formule

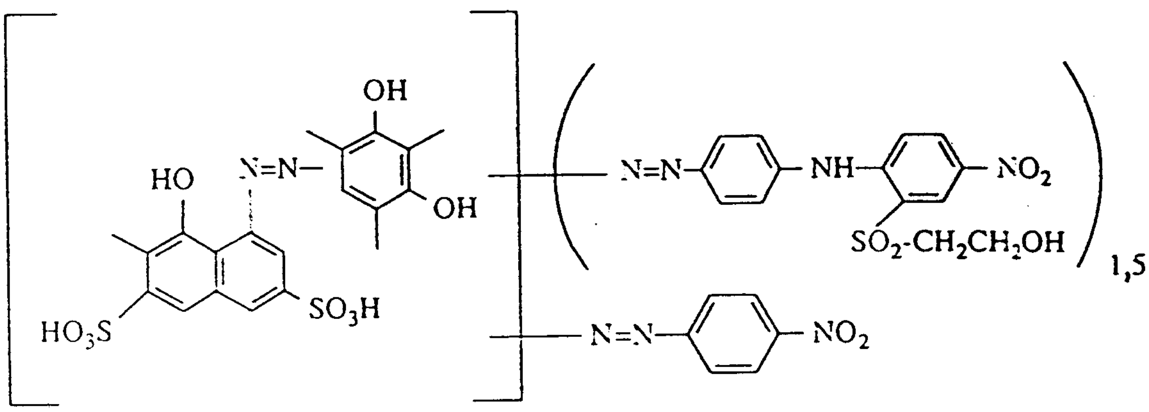

3. Procédé de production de colorants polyazoïques suivant les revendications 1 et 2, caractérisé en ce qu'on réunit dans un ordre quelconque et d'une manière connue des copulants de formule

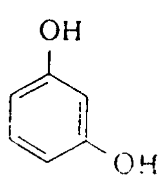

avec les composés de diazonium des amines de formules

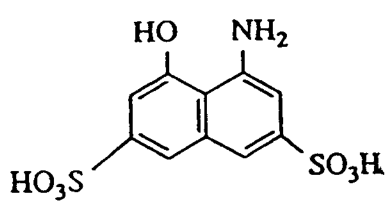

et

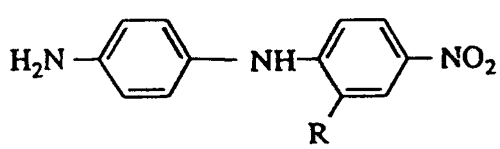

où

R est un groupe $-SO_2NH_2$ ou $-SO_2CH_2CH_2OH$
et, le cas échéant, avec la p-nitro-aniline.

4. Procédé de teinture de fibres contenant des groupes amide, caractérisé en ce qu'on utilise des colorants suivant les revendications 1 et 2.

5. Procédé de teinture de cuir, caractérisé en ce qu'on utilise des colorants suivant les revendications 1 et 2.